# EUROPÄISCHE PATENTSCHRIFT

(11) **EP 3 459 792 B1**
(45) Veröffentlichungstag und Bekanntmachung des Hinweises auf die Patenterteilung: **16.03.2022**
(21) Anmeldenummer: 18192828.4
(22) Anmeldetag: 05.09.2018
(51) Int. Cl.: B60Q 1/32, B61L 15/00, B60Q 1/26

(54) **VERFAHREN, VORRICHTUNG UND COMPUTERLESBARES SPEICHERMEDIUM MIT INSTRUKTIONEN ZUM KENNZEICHNEN EINER AUSSTIEGSSEITE EINES KRAFTFAHRZEUGS**
METHOD, DEVICE AND COMPUTER-READABLE STORAGE MEDIUM WITH INSTRUCTIONS FOR MARKING AN EXIT SIDE OF A MOTOR VEHICLE
PROCÉDÉ, DISPOSITIF ET SUPPORT D'ENREGISTREMENT LISIBLE PAR ORDINATEUR POURVU D'INSTRUCTIONS D'IDENTIFICATION D'UN CÔTÉ SORTIE D'UN VÉHICULE AUTOMOBILE

(30) Priorität: 26.09.2017 DE 102017217074
(43) Veröffentlichungstag der Anmeldung: 27.03.2019
(73) Patentinhaber: VOLKSWAGEN AKTIENGESELLSCHAFT, 38440 Wolfsburg (DE)
(72) Erfinder: Ueberschär, Frederik, 27793 Wildeshausen (DE); Palzer, Daniel, 10967 Berlin (DE)

(56) Entgegenhaltungen:
- WO-A1-2016/188986
- DE-A1-102008 012 898
- DE-A1-102009 012 242
- DE-A1-102011 014 263
- DE-A1-102014 226 187
- US-A1- 2017 217 364

## Beschreibung

Die vorliegende Erfindung betrifft ein Verfahren, eine Vorrichtung und ein computerlesbares Speichermedium mit Instruktionen zum Kennzeichnen einer Ausstiegsseite eines Kraftfahrzeugs. Die Erfindung betrifft weiterhin ein Kraftfahrzeug, in dem ein erfindungsgemäßes Verfahren oder eine erfindungsgemäße Vorrichtung eingesetzt wird.

Im Straßenverkehr gibt es eine Vielzahl von Situationen, in denen ein Gefährdungspotential besteht. Die meisten dieser Situationen betreffen die Bewegung eines Kraftfahrzeugs im fließenden Verkehr. Allerdings bestehen auch bei Stillstand des Kraftfahrzeugs gewisse Unfallrisiken, insbesondere wenn ein Fahrzeuginsasse aus dem Kraftfahrzeug aussteigen möchte. Ursache dafür ist oftmals das unachtsame Öffnen von Türen, mit denen dann andere Kraftfahrzeuge oder auch Radfahrer kollidieren. Zur Reduzierung solcher Risiken sind aus dem Stand der Technik eine Reihe von Lösungsansätzen bekannt.

Beispielsweise beschreibt die DE 103 12 252 A1 ein Verfahren zur Vermeidung von Personen- und Sachschäden durch Kraftfahrzeugtüren anhaltender oder parkender Kraftfahrzeuge. Mit einer Kamera wird der Außenraum neben dem Kraftfahrzeug überwacht. Bei Feststellen eines Anhaltevorgangs oder bei Betätigung einer Türentriegelung wird ein Überwachungsmodus aktiviert und ein akustisches, optisches oder haptisches Warnsignal an einen Fahrzeuginsassen ausgegeben, falls ein ortsfestes oder herannahendes Objekt detektiert wird, das zu einer Kollision mit der Tür oder dem aussteigenden Fahrzeuginsassen führen könnte.

Ein ähnlicher Lösungsansatz ist aus der DE 10 2012 015 753 A1 bekannt, die ein Verfahren zum Warnen eines Nutzers eines Kraftfahrzeugs vor einer Gefahr der Kollision des Kraftfahrzeugs mit einem Objekt beschreibt. Falls eine Kollisionsgefahr festgestellt wird, erfolgt ein Warnen des Nutzers vor der Kollisionsgefahr mittels einer zum Beleuchten eines Innenraums des Kraftfahrzeugs vorgesehenen Innenraumbeleuchtungsvorrichtung. Beispielsweise kann eine Leuchtfarbe, eine Leuchtintensität oder ein Beleuchtungsort geändert werden.

Zudem beschreibt die DE 10 2010 020 811 A1 ein Türschloss mit einem beleuchteten Innengriff für ein Kraftfahrzeug. Beim Betätigen des Innengriffs werden Sensoren aktiviert, die die Umgebung des Kraftfahrzeugs erfassen. Falls ein Verkehrsteilnehmer in der Umgebung erkannt wird, erfolgt eine Warnung an einen Fahrzeuginsassen. Dazu kann eine optische Warnung durch den beleuchteten Innengriff oder eine akustische Warnung ausgegeben werden.

Bei den oben genannten Lösungsansätzen erfolgt eine Warnung des Fahrzeuginsassen regelmäßig unter Berücksichtigung einer Ausstiegsseite. Diese ist durch die Tür bestimmt, die der Fahrzeuginsasse gerade öffnen möchte. Die Warnung kann aber unabhängig von einer Ausstiegsseite erfolgen. In diesem Fall werden potentielle Risiken in der gesamten Umgebung des Kraftfahrzeugs erfasst.

Bei heutigen Kraftfahrzeugen wird die Ausstiegsseite für einen Fahrzeuginsassen üblicherweise durch den Sitzplatz des Fahrzeuginsassen im Kraftfahrzeug bestimmt. So wird der Fahrer im Regelfall auf der Fahrerseite aussteigen, der Beifahrer auf der Beifahrerseite.

Bei Fahrzeuginsassen im Fond des Kraftfahrzeugs ist die Situation bereits weniger eindeutig. Zwar erfolgt der Ausstieg im Normalfall durch die nächstgelegene Tür, dies ist aber nicht immer der Fall. Zudem gibt es keine bevorzugte Ausstiegsseite für einen Fahrzeuginsassen auf dem mittleren Platz im Fond. Es kann daher wünschenswert sein, den Fahrzeuginsassen eine bevorzugte oder sinnvolle Ausstiegsseite anzuzeigen.

Das Anzeigen einer Ausstiegsseite wird mit dem Aufkommen autonomer Kraftfahrzeuge und sogenannter Roboter-Taxis an Bedeutung gewinnen. Bei derartigen Kraftfahrzeugen gibt es für die Fahrzeuginsassen regelmäßig keine durch den Aufbau des Kraftfahrzeugs bedingte bevorzugte Ausstiegsseite.

In diesem Zusammenhang ist aus der DE 10 2008 012 898 A1 ein Verfahren zur Ausgabe von Informationen für das Verlassen eines Kraftfahrzeugs in Abhängigkeit von einer Kollisionsgefahr beim Verlassen des Kraftfahrzeugs bekannt. Das Verfahren findet insbesondere nach einem Unfall Anwendung. Die Informationen zeigen an, über welchen Ausstieg das Kraftfahrzeug mit einer minimalen Kollisionsgefahr verlassen werden kann. Die Kollisionsgefahr wird in Abhängigkeit von dynamischen und statischen Umweltbedingungen bestimmt. Die Ausgabe kann dabei akustisch durch ein Sprachkommando, optisch durch eine Anzeige und haptisch durch entsprechende Anregungen der Fahrzeuginsassen erfolgen. Ebenso ist vorgesehen, den Ausstieg durch das Öffnen der Türen auf der Seite, auf der das Verlassen des Kraftfahrzeugs mit der minimalen Kollisionsgefahr möglich ist, anzuzeigen.

DE 10 2011 014 263 A1 beschreibt eine Fenstervorrichtung für ein Kraftfahrzeug, die eine transparente erste Scheibe zum Auskoppeln von Licht und eine transparente zweite Scheibe, die mit der ersten Scheibe parallel verbunden ist, aufweist. Außerdem besitzt die Fenstervorrichtung eine Beleuchtungseinrichtung zum Einkoppeln von erstem Licht in die erste Scheibe. Die zweite Scheibe weist eine zweite Struktur zum Auskoppeln von Licht auf. Mit der Beleuchtungsvorrichtung ist unabhängig von dem ersten Licht ein zweites Licht in die zweite Scheibe einkoppelbar. Die Fenstervorrichtung kann genutzt werden, um auf eine Gefahr beim Ausstieg hinzuweisen.

Es ist eine Aufgabe der Erfindung, verbesserte Lösungen zum Kennzeichnen einer Ausstiegsseite eines Kraftfahrzeugs aufzuzeigen.

Diese Aufgabe wird durch ein Verfahren mit den Merkmalen des Anspruchs 1, durch ein computerlesbares Speichermedium mit Instruktionen gemäß Anspruch 7 und durch eine Vorrichtung mit den Merkmalen des Anspruchs 8 gelöst. Bevorzugte Ausgestaltungen der Erfindung sind Gegenstand der abhängigen Ansprüche.

Gemäß einem ersten Aspekt der Erfindung umfasst ein Verfahren zum Kennzeichnen einer Ausstiegsseite eines Kraftfahrzeugs die Schritte:
- Ermitteln durch eine Analyseeinheit, einer Ausstiegsseite des Kraftfahrzeugs; und
- Simulieren durch eine Steuerungseinheit, eines Öffnens einer Tür auf der ermittelten Ausstiegsseite
wobei zum Simulieren des Öffnens der Tür Außengeräusche zumindest in einem Türbereich auf der ermittelten Ausstiegsseite wiedergegeben werden oder ein Luftstrom zumindest in einem Türbereich auf der ermittelten Ausstiegsseite erzeugt wird.

Gemäß einem weiteren Aspekt der Erfindung enthält ein computerlesbares Speichermedium Instruktionen, die bei Ausführung durch einen Computer den Computer zur Ausführung der folgenden Schritte zum Kennzeichnen einer Ausstiegsseite eines Kraftfahrzeugs veranlassen:
- Ermitteln einer Ausstiegsseite des Kraftfahrzeugs; und
- Simulieren eines Öffnens einer Tür auf der ermittelten Ausstiegsseite;
wobei zum Simulieren des Öffnens der Tür Außengeräusche zumindest in einem Türbereich auf der ermittelten Ausstiegsseite wiedergegeben werden oder ein Luftstrom zumindest in einem Türbereich auf der ermittelten Ausstiegsseite erzeugt wird.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zum Kennzeichnen einer Ausstiegsseite eines Kraftfahrzeugs auf:
- eine Analyseeinheit zum Ermitteln einer Ausstiegsseite des Kraftfahrzeugs; und
- eine Steuerungseinheit zum Simulieren eines Öffnens einer Tür auf der ermittelten Ausstiegsseite;
wobei die Steuerungseinheit eingerichtet ist, zum Simulieren des Öffnens der Tür Außengeräusche zumindest in einem Türbereich auf der ermittelten Ausstiegsseite wiederzugeben oder einen Luftstrom zumindest in einem Türbereich auf der ermittelten Ausstiegsseite zu erzeugen.

Die erfindungsgemäße Lösung nutzt eine Simulation des physischen Öffnens zumindest einer Tür, um den Fahrzeuginsassen die Ausstiegsseite zu verdeutlichen, ohne die Türöffnung wirklich durchzuführen. Gründe gegen ein automatisiertes Öffnen der Tür sind beispielsweise eine Gefahrensituation im Umkreis des Fahrzeugs oder der Wunsch des Fahrzeuginsassen, noch länger im Fahrzeug zu verweilen. Durch die Simulation einer Türöffnung werden die Außenwelt und der abgeschottete Innenraum behutsam zusammengeführt. Durch dieses behutsame Zusammenführen kann der Fahrzeuginsasse sich auf die veränderte Umgebung einstellen und die Transition zwischen den beiden Räumen auf eine angenehme Art und Weise begehen.

Erfindungsgemäß werden zum Simulieren des Öffnens der Tür Außengeräusche zumindest in einem Türbereich auf der ermittelten Ausstiegsseite wiedergegeben. Dabei können die Außengeräusche simulierte Außengeräusche oder von einem Mikrofon erfasste reale Außengeräusche sein. Beispiele für simulierte Außengeräusche sind aufgezeichnete reale Geräusche, die aus einem Speicher abgerufen werden, oder auf Basis von Simulationsparametern generierte künstliche Geräusche. Durch die typischerweise verbaute Geräuschdämmung dringen in der Regel kaum Außengeräusche in den Innenraum eines Kraftfahrzeugs ein. Durch die Wiedergabe von Außengeräuschen wird daher unmittelbar der Eindruck erzeugt, dass eine Tür geöffnet wurde. Auch hier können Umweltparameter oder die Tageszeit berücksichtigt werden. In einer lauten Umgebung oder einer unangenehmen Geräuschkulisse kann es vorzuziehen sein, anstelle von realen Außengeräuschen nur simulierte Außengeräusche wiederzugeben oder die realen Außengeräusche zu filtern oder mit reduzierter Lautstärke wiederzugeben. Ebenso treten nachts relativ wenig reale Außengeräusche auf, sodass es sinnvoller sein kann, simulierte Außengeräusche wiederzugeben.

Alternativ wird erfindungsgemäß zum Simulieren des Öffnens der Tür ein Luftstrom zumindest in einem Türbereich auf der ermittelten Ausstiegsseite erzeugt. Mit diesem Luftstrom kann auf einfache Weise die aus der Außenwelt durch eine geöffnete Tür in den Innenraum einströmende Luft simuliert werden.

Gemäß einem Aspekt der Erfindung wird zum Simulieren des Öffnens der Tür zusätzlich eine Helligkeit zumindest in einem Türbereich auf der ermittelten Ausstiegsseite erhöht. Dazu kann beispielsweise eine Leuchtstärke einer Beleuchtung verändert oder eine Lichtdurchlässigkeit eines Fensters erhöht werden. Oftmals werden in Kraftfahrzeugen leicht abgedunkelte Scheiben genutzt. Durch eine Erhöhung der Helligkeit wird daher unmittelbar der Eindruck erzeugt, dass eine Tür geöffnet wurde. Falls z.B. elektrochrome Scheiben verbaut sind, deren Lichtdurchlässigkeit steuerbar ist, kann durch entsprechende Ansteuerung der Scheiben die Lichtdurchlässigkeit eines Fensters erhöht werden. Elektrochrome Scheiben können beispielsweise auf Basis von PDLC-Glas (PDLC: Polymer-Dispersed-Liquid-Crystal; polymerdispergierter Flüssigkristall) oder SPD-Glas (SPD: Suspended Particles Device; Schwebstoffvorrichtung) realisiert werden. Alternativ kann einfach die Helligkeit einer vorhandenen Beleuchtung erhöht werden. Dabei können auch Umweltparameter oder die Tageszeit berücksichtigt werden. So hat z.B. das Erhöhen der Lichtdurchlässigkeit eines Fensters nachts, bei fehlender Außenbeleuchtung, nur wenig Effekt, sodass sinnvollerweise eher die Beleuchtung verändert werden sollte. Bei besonders hellem Sonnenlicht kann es wiederum sinnvoll sein, die Lichtdurchlässigkeit des Fensters nur geringfügig zu erhöhen, damit der Fahrzeuginsasse nicht geblendet wird.

Die beschriebenen Möglichkeiten, das Öffnen einer Tür zu simulieren, können beliebig miteinander kombiniert werden, wobei auch nur einzelne Ansätze genutzt werden können. Ebenso können zeitliche Abfolgen realisiert werden, indem beispielsweise zunächst die Helligkeit erhöht wird und erst nach einer gewissen Zeitspanne Außengeräusche und ein Luftstrom hinzugefügt werden.

Durch die reine Simulation der sich verändernden Stimuli Licht, Sound und Luft wird der Nutzer auf die Tür aufmerksam gemacht, ohne in mögliche Komplikationen durch ein physisches Öffnen der Tür zu geraten. Mit dem Ansprechen mehrerer Sinne berücksichtigt das Konzept den Aspekt der Barrierefreiheit und kann auch von seh- oder hörbeeinträchtigten Nutzern wahrgenommen werden.

Gemäß einem Aspekt der Erfindung wird die Ausstiegsseite mit Hilfe von Fahrzeugsensoren oder anhand einer Position des Kraftfahrzeugs aus Kartendaten ermittelt. Beispielsweise können auf Basis von Daten der Fahrzeugsensoren Randsteine, Gebäude, Fahrzeuge oder Personen in der Umgebung des Kraftfahrzeugs detektiert werden. Während Randsteine, Gebäude oder Personen auf einer Seite des Kraftfahrzeugs darauf schließen lassen, dass ein Ausstieg auf dieser Seite erfolgen sollte, sind detektierte Fahrzeuge ein Indiz dafür, dass ein Ausstieg auf der gegenüberliegenden Seite erfolgen sollte. Auf Basis dieser Informationen lässt sich daher leicht eine sinnvolle Ausstiegsseite bestimmen. Sofern die Position des Kraftfahrzeugs bekannt ist, kann die Ausstiegsseite alternativ auch direkt aus verfügbaren Kartendaten entnommen werden. Dies hat den Vorteil, dass keine Auswertung von Sensordaten erforderlich ist, bei der gegebenenfalls Fehler auftreten können.

Besonders vorteilhaft wird ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Kennzeichnen einer Ausstiegsseite eines Kraftfahrzeugs;
- Fig. 2: zeigt eine erste Ausführungsform einer Vorrichtung zum Kennzeichnen einer Ausstiegsseite eines Kraftfahrzeugs;
- Fig. 3: zeigt eine zweite Ausführungsform einer Vorrichtung zum Kennzeichnen einer Ausstiegsseite eines Kraftfahrzeugs;
- Fig. 4: stellt schematisch ein vollautonomes Kraftfahrzeug dar, in dem eine erfindungsgemäße Lösung realisiert ist;
- Fig. 5: zeigt einen Innenraum eines Kraftfahrzeugs in einem Ausgangszustand;
- Fig. 6: zeigt den Innenraum des Kraftfahrzeugs mit einer aufgehellten Ausstiegsseite;
- Fig. 7: zeigt den Innenraum des Kraftfahrzeugs mit einer angedeuteten zusätzlichen Wiedergabe von Außengeräuschen; und
- Fig. 8: zeigt den Innenraum des Kraftfahrzeugs mit einer angedeuteten zusätzlichen Erzeugung eines Luftstroms.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

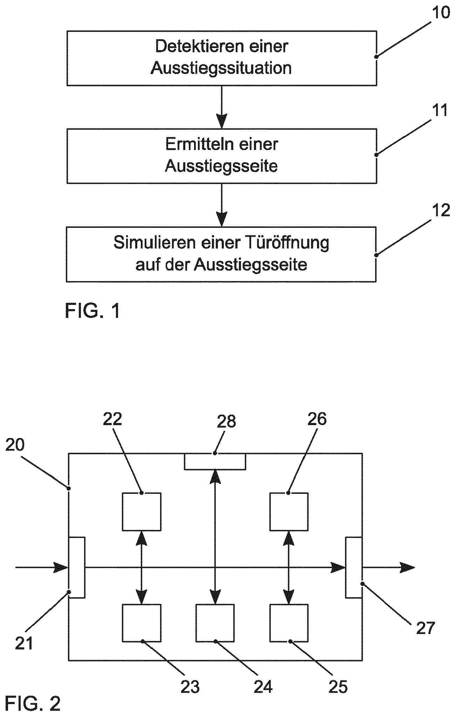

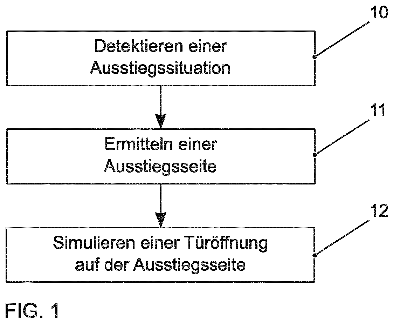

Fig. 1 zeigt schematisch ein Verfahren zum Kennzeichnen einer Ausstiegsseite eines Kraftfahrzeugs. In einem ersten Schritt wird das Vorliegen einer Ausstiegssituation detektiert 10. Das Vorliegen einer Ausstiegssituation kann beispielsweise angenommen werden, wenn das Kraftfahrzeug ein zuvor erfasstes Fahrtziel erreicht hat, der Fahrer das Kraftfahrzeug ausschaltet oder ein Fahrzeuginsasse bei Stillstand des Kraftfahrzeugs seinen Sicherheitsgurt öffnet. Wenn eine Ausstiegssituation vorliegt, wird eine Ausstiegsseite des Kraftfahrzeugs ermittelt 11. Dazu können Daten von Fahrzeugsensoren genutzt werden, indem beispielsweise Randsteine, Gebäude, Fahrzeuge oder Personen in der Umgebung des Kraftfahrzeugs detektiert werden. Alternativ kann die Ausstiegsseite auch anhand einer Position des Kraftfahrzeugs aus Kartendaten ermittelt werden. Schließlich wird auf der ermittelten Ausstiegsseite das Öffnen einer Tür simuliert 12. Dazu kann beispielsweise eine Helligkeit auf der ermittelten Ausstiegsseite erhöht werden, wahlweise über die gesamte Länge des Innenraumes des Kraftfahrzeugs oder zumindest in einem Türbereich. Zum Erhöhen der Helligkeit kann eine Leuchtstärke einer Beleuchtung angepasst werden.

Alternativ oder zusätzlich kann auch eine Lichtdurchlässigkeit eines Fensters erhöht werden, z.B. bei Verwendung elektrochromer Scheiben. Ebenso ist es möglich, zum Simulieren des Öffnens der Tür Außengeräusche zumindest in einem Türbereich auf der ermittelten Ausstiegsseite wiederzugeben. Bei den Außengeräuschen kann es sich um simulierte Außengeräusche oder um von einem Mikrofon erfasste reale Außengeräusche handeln. Als weitere Möglichkeit kann ein Luftstrom zumindest in einem Türbereich auf der ermittelten Ausstiegsseite erzeugt werden. Selbstverständlich können die verschiedenen Ansätze zum Simulieren des Öffnens der Tür auch ganz oder teilweise kombiniert oder in einer gewünschten zeitlichen Abfolge umgesetzt werden.

Fig. 2 zeigt eine vereinfachte schematische Darstellung einer ersten Ausführungsform einer Vorrichtung 20 zum Kennzeichnen einer Ausstiegsseite eines Kraftfahrzeugs. Die Vorrichtung 20 hat einen Eingang 21, über den Daten von Fahrzeugsensoren, Navigationsdaten oder andere Informationen empfangen werden können. Die Vorrichtung 20 hat zudem eine Einheit 22 zum Bestimmen einer Fahrsituation, durch die das Vorliegen einer Ausstiegssituation detektiert werden kann. Das Vorliegen einer Ausstiegssituation kann beispielsweise angenommen werden, wenn das Kraftfahrzeug ein zuvor erfasstes Fahrtziel erreicht hat, der Fahrer das Kraftfahrzeug ausschaltet oder ein Fahrzeuginsasse bei Stillstand des Kraftfahrzeugs seinen Sicherheitsgurt öffnet. Ebenso ist es möglich, dass das Vorliegen einer Ausstiegssituation von Komponenten außerhalb der Vorrichtung 20 detektiert wird. In diesem Fall kann eine entsprechende Information über den Eingang 21 an die Vorrichtung 20 übermittelt werden. Eine Analyseeinheit 23 ermittelt bei Vorliegen einer Ausstiegssituation eine Ausstiegsseite des Kraftfahrzeugs. Dazu können Daten von Fahrzeugsensoren genutzt werden, indem beispielsweise Randsteine, Gebäude, Fahrzeuge oder Personen in der Umgebung des Kraftfahrzeugs detektiert werden. Alternativ kann die Ausstiegsseite auch anhand einer Position des Kraftfahrzeugs aus Kartendaten ermittelt werden. Eine Steuerungseinheit 24 simuliert dann das Öffnen einer Tür auf der ermittelten Ausstiegsseite. Dazu kann beispielsweise eine Helligkeit auf der ermittelten Ausstiegsseite erhöht werden, wahlweise über die gesamte Länge des Innenraumes des Kraftfahrzeugs oder zumindest in einem Türbereich. Zum Erhöhen der Helligkeit kann eine Leuchtstärke einer Beleuchtung angepasst werden. Alternativ oder zusätzlich kann auch eine Lichtdurchlässigkeit eines Fensters erhöht werden, z.B. bei Verwendung elektrochromer Scheiben. Ebenso ist es möglich, zum Simulieren des Öffnens der Tür Außengeräusche zumindest in einem Türbereich auf der ermittelten Ausstiegsseite wiederzugeben. Bei den Außengeräuschen kann es sich um simulierte Außengeräusche oder um von einem Mikrofon erfasste reale Außengeräusche handeln. Als weitere Möglichkeit kann ein Luftstrom zumindest in einem Türbereich auf der ermittelten Ausstiegsseite erzeugt werden.

Selbstverständlich können die verschiedenen Ansätze zum Simulieren des Öffnens der Tür auch ganz oder teilweise kombiniert oder in einer gewünschten zeitlichen Abfolge umgesetzt werden. Über einen Ausgang 27 der Vorrichtung 20 werden Steuerbefehle der Steuerungseinheit 24 an entsprechende Steuergeräte des Kraftfahrzeugs ausgegeben.

Die Einheit 22 zum Bestimmen einer Fahrsituation, die Analyseeinheit 23 und die Steuerungseinheit 24 können von einer Kontrolleinheit 25 gesteuert werden. Über eine Benutzerschnittstelle 28 können gegebenenfalls Einstellungen der Einheit 22 zum Bestimmen einer Fahrsituation, der Analyseeinheit 23, der Steuerungseinheit 24 oder der Kontrolleinheit 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Die Einheit 22 zum Bestimmen einer Fahrsituation, die Analyseeinheit 23, die Steuerungseinheit 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU (GPU: Graphics Processing Unit; Grafikprozessor). Der Eingang 21 und der Ausgang 27 können als getrennte Schnittstellen oder als eine kombinierte bidirektionale Schnittstelle implementiert sein.

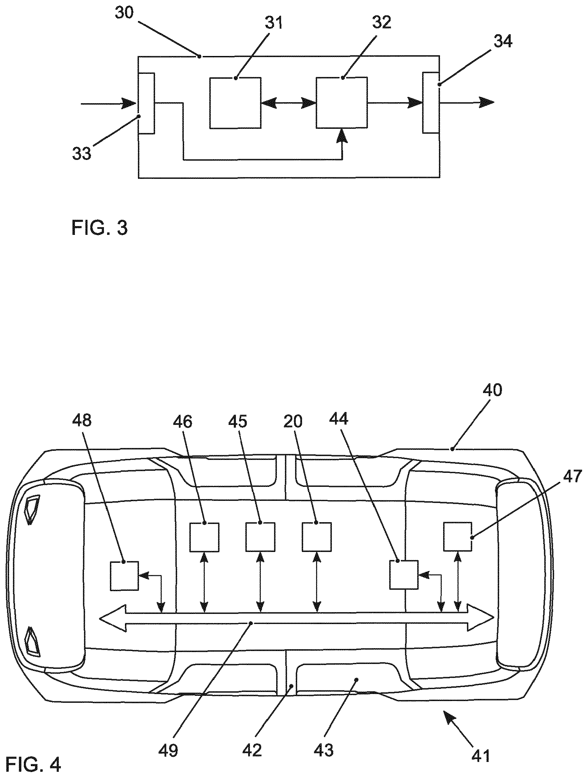

Fig. 3 zeigt eine vereinfachte schematische Darstellung einer zweiten Ausführungsform einer Vorrichtung 30 zum Kennzeichnen einer Ausstiegsseite eines Kraftfahrzeugs. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Daten einer Sensorik des Kraftfahrzeugs, z.B. von einer Frontkamera des Kraftfahrzeugs oder von Lidar-, Radar- oder Ultraschallsensoren, oder von Daten eines Navigationssystems des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nicht-volatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein vollautonomes Kraftfahrzeug 40 dar, in dem eine erfindungsgemäße Lösung realisiert ist. Das Kraftfahrzeug 40 weist eine Vorrichtung 20 zum Kennzeichnen einer Ausstiegsseite 41 auf. Die Vorrichtung 20 kann dazu mittelbar oder unmittelbar Komponenten in den Türen 42 oder Fenstern 43 des Kraftfahrzeugs 40 ansteuern. Weitere Komponenten des Kraftfahrzeugs 40 sind eine Umgebungssensorik 44, ein Navigationssystem 45, eine Datenübertragungseinheit 46 sowie ein Steuerungscomputer 47 zur Steuerung des Kraftfahrzeugs 40. Mittels der Datenübertragungseinheit 46 kann beispielsweise eine Verbindung zu Dienstanbietern aufgebaut werden. Auf Basis der Daten der Umgebungssensorik 44, die beispielsweise eine Kamera sowie Lidar-, Radar- oder Ultraschallsensoren umfassen kann, können unter anderem Randsteine, Gebäude, Fahrzeuge oder Personen in der Umgebung des Kraftfahrzeugs detektiert werden. Zur Speicherung von Daten ist ein Speicher 48 vorhanden. Der Datenaustausch zwischen den verschiedenen Komponenten des Kraftfahrzeugs 40 erfolgt über ein Netzwerk 49.

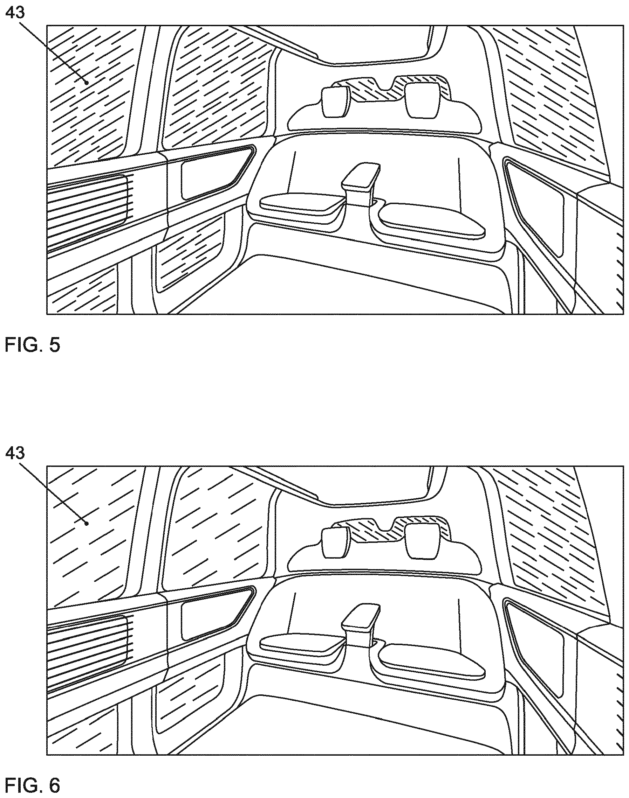

Nachfolgend soll die Funktionsweise der erfindungsgemäßen Lösung beispielhaft anhand der Figuren 5 bis 8 erläutert werden. In den Figuren ist der Innenraum eines Kraftfahrzeugs in verschiedenen Zuständen dargestellt.

Fig. 5 zeigt einen Innenraum eines Kraftfahrzeugs in einem Ausgangszustand. Die Scheiben sind relativ stark getönt, was durch die Schraffur der Fenster 43 angedeutet ist, und es gelangen nahezu keine Geräusche der Außenwelt in den Innenraum. Dies ist der übliche Zustand während der Fahrt bzw. solange keine Ausstiegssituation detektiert wurde.

Fig. 6 zeigt den Innenraum des Kraftfahrzeugs mit einer aufgehellten Ausstiegsseite. An der Ausstiegsseite reduziert sich die Tönung der Scheiben, sodass mehr Licht in den Innenraum gelangt. Dies ist durch die reduzierte Schraffur der Fenster 43 angedeutet. Im gezeigten Beispiel beschränkt sich die Erhöhung der Lichtdurchlässigkeit nicht auf den Türbereich, sondern erstreckt sich über einen größeren Teil des Innenraums.

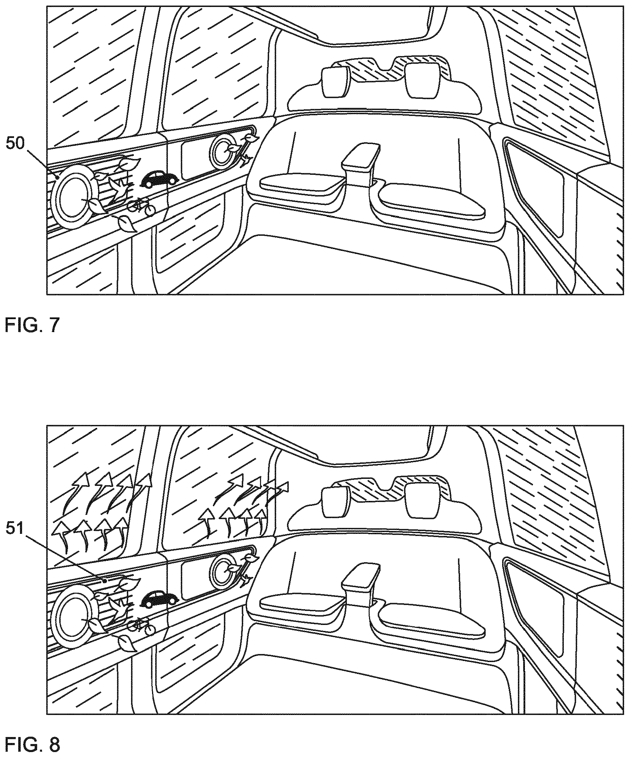

Fig. 7 zeigt den Innenraum des Kraftfahrzeugs mit einer angedeuteten zusätzlichen Wiedergabe von Außengeräuschen. Dazu werden Geräusche der Außenwelt aufgenommen und mit Lautsprechern 50 aus der Richtung der Tür in den Innenraum eingespielt. Alternativ werden simulierte Außengeräusche wiedergegeben.

Fig. 8 zeigt den Innenraum des Kraftfahrzeugs mit einer angedeuteten zusätzlichen Erzeugung eines Luftstroms. Durch Lüftungsschlitze 51 gelangt ein spürbarer Luftstrom von der Seite der Tür in den Fahrzeuginnenraum.

Die beschriebenen Möglichkeiten, das Öffnen einer Tür zu simulieren, können beliebig miteinander kombiniert werden, wobei auch nur einzelne Ansätze genutzt werden können. Ebenso können zeitliche Abfolgen realisiert werden, indem beispielsweise zunächst die Helligkeit erhöht wird und erst nach einer gewissen Zeitspanne Außengeräusche und ein Luftstrom hinzugefügt werden.

Beim Simulieren des Öffnens der Tür kann auch die Tageszeit berücksichtigt werden. So hat z.B. das Erhöhen der Lichtdurchlässigkeit eines Fensters nachts, bei fehlender Außenbeleuchtung, nur wenig Effekt, sodass sinnvollerweise eher die Beleuchtung verändert werden sollte. Ebenso treten nachts relativ wenig reale Außengeräusche auf, sodass besser simulierte Außengeräusche wiedergegeben werden.

Eine weitere Option besteht darin, Umweltparameter zu berücksichtigen. In einer lauten Umgebung oder einer unangenehmen Geräuschkulisse ist es vorzuziehen, anstelle von realen Außengeräuschen nur simulierte Außengeräusche wiederzugeben oder die realen Außengeräusche zu filtern oder mit reduzierter Lautstärke wiederzugeben. Bei besonders hellem Sonnenlicht kann es wiederum sinnvoll sein, die Lichtdurchlässigkeit eines Fensters nur geringfügig zu erhöhen, damit der Fahrzeuginsasse nicht geblendet wird.

Vorzugsweise sind die zugehörigen Parameter für den Nutzer des Kraftfahrzeugs konfigurierbar, sodass der Nutzer festlegen kann, welche der beschriebenen Ansätze genutzt werden und wie sie ausgestaltet sein sollen.

### Bezugszeichenliste

- 10: Detektieren einer Ausstiegssituation
- 11: Ermitteln einer Ausstiegsseite
- 12: Simulieren einer Türöffnung auf der Ausstiegsseite
- 20: Vorrichtung
- 21: Eingang
- 22: Einheit zum Bestimmen einer Fahrsituation
- 23: Analyseeinheit
- 24: Steuerungseinheit
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Kraftfahrzeug
- 41: Ausstiegsseite
- 42: Tür
- 43: Fenster
- 44: Umgebungssensorik
- 45: Navigationssystem
- 46: Datenübertragungseinheit
- 47: Steuerungscomputer
- 48: Speicher
- 49: Netzwerk
- 50: Lautsprecher
- 51: Lüftung

## Patentansprüche

1. Verfahren zum Kennzeichnen einer Ausstiegsseite (41) eines Kraftfahrzeugs (40), mit den Schritten:
- Ermitteln, durch eine Analyseeinheit, (11) einer Ausstiegsseite des Kraftfahrzeugs (40); und
- Simulieren, durch eine Steuerungseinheit, (12) eines Öffnens einer Tür (42) auf der ermittelten Ausstiegsseite (41),
**dadurch gekennzeichnet, dass** zum Simulieren (12) des Öffnens der Tür (42) Außengeräusche zumindest in einem Türbereich auf der ermittelten Ausstiegsseite (41) wiedergegeben werden oder ein Luftstrom zumindest in einem Türbereich auf der ermittelten Ausstiegsseite (41) erzeugt wird.

2. Verfahren gemäß Anspruch 1, wobei zum Simulieren (12) des Öffnens der Tür (42) zusätzlich eine Helligkeit zumindest in einem Türbereich auf der ermittelten Ausstiegsseite (41) erhöht wird.

3. Verfahren gemäß Anspruch 2, wobei zum Erhöhen der Helligkeit eine Leuchtstärke einer Beleuchtung verändert wird oder eine Lichtdurchlässigkeit eines Fensters (43) erhöht wird.

4. Verfahren gemäß einem der vorherigen Ansprüche, wobei die Außengeräusche simulierte Außengeräusche oder von einem Mikrofon erfasste reale Außengeräusche sind.

5. Verfahren gemäß einem der vorherigen Ansprüche, wobei die Ausstiegsseite (41) mit Hilfe von Fahrzeugsensoren (44) oder anhand einer Position des Kraftfahrzeugs (40) aus Kartendaten ermittelt wird (11).

6. Verfahren gemäß Anspruch 5, wobei auf Basis von Daten der Fahrzeugsensoren (44) Randsteine, Gebäude, Fahrzeuge oder Personen in der Umgebung des Kraftfahrzeugs (40) detektiert werden.

7. Computerlesbares Speichermedium mit Instruktionen, die bei Ausführung durch einen Computer den Computer zur Ausführung der Schritte eines Verfahrens gemäß einem der Ansprüche 1 bis 6 zum Kennzeichnen einer Ausstiegsseite (41) eines Kraftfahrzeugs (40) veranlassen.

8. Vorrichtung (20) zum Kennzeichnen einer Ausstiegsseite (41) eines Kraftfahrzeugs (40), mit:
- einer Analyseeinheit (23) zum Ermitteln (11) einer Ausstiegsseite des Kraftfahrzeugs (40); und
- einer Steuerungseinheit (24) zum Simulieren (12) eines Öffnens einer Tür (42) auf der ermittelten Ausstiegsseite (41);
**dadurch gekennzeichnet, dass** die Steuerungseinheit (24) eingerichtet ist, zum Simulieren (12) des Öffnens der Tür (42) Außengeräusche zumindest in einem Türbereich auf der ermittelten Ausstiegsseite (41) wiederzugeben oder einen Luftstrom zumindest in einem Türbereich auf der ermittelten Ausstiegsseite (41) zu erzeugen.

9. Kraftfahrzeug (40), **dadurch gekennzeichnet, dass** das Kraftfahrzeug (40) eine Vorrichtung (20) gemäß Anspruch 8 aufweist oder eingerichtet ist, ein Verfahren gemäß einem der Ansprüche 1 bis 6 zum Kennzeichnen einer Ausstiegsseite (41) des Kraftfahrzeugs (40) auszuführen.

## Claims

1. A method for marking an exit side (41) of a motor vehicle (40), comprising the steps of:
- determining, by an analysis unit, (11) an exit side of the motor vehicle (40); and
- simulating, by a control unit, (12) a door (42) opening on the determined exit side (41),
**characterized in that** for simulating (12) the door (42) opening, external noise is reproduced at least in a door area on the determined exit side (41) or an air flow is generated at least in a door area on the determined exit side (41).

2. The method according to Claim 1, wherein for simulating (12) the door (42) opening, a brightness is additionally increased at least in a door area on the determined exit side (41).

3. The method according to Claim 2, wherein for increasing the brightness, a luminous intensity of an illumination is changed or a translucence of a window (43) is increased.

4. The method according to one of the preceding claims, wherein the external noise is simulated external noise or real external noise recorded by a microphone.

5. The method according to one of the preceding claims, wherein the exit side (41) is determined (11) with the aid of vehicle sensors (44) or from map data based on a position of the motor vehicle (40).

6. The method according to Claim 5, wherein on the basis of data of the vehicle sensors (44), curbs, buildings, vehicles, or persons in the surroundings of the motor vehicle (40) are detected.

7. A computer-readable storage medium with instructions that, when executed by a computer, cause the computer to execute the steps of a method according to one of Claims 1 to 6 for marking an exit side (41) of a motor vehicle (40).

8. A device (20) for marking an exit side (41) of a motor vehicle (40), comprising:
- an analysis unit (23) for determining (11) an exit side of the motor vehicle (40); and
- a control unit (24) for simulating (12) a door (42) opening on the determined exit side (41);
**characterized in that** for simulating (12) the door (42) opening, the control unit (24) is configured to reproduce external noise at least in a door area on the determined exit side (41) or to generate an air flow at least in a door area on the determined exit side (41).

9. A motor vehicle (40), **characterized in that** the motor vehicle (40) has a device (20) according to Claim 8 or is configured to execute a method according to one of Claims 1 to 6 for marking an exit side (41) of the motor vehicle (40).

## Revendications

1. Procédé d'identification d'un côté sortie (41) d'un véhicule automobile (40), comprenant les étapes de :
- détermination, par une unité d'analyse, (11) d'un côté sortie du véhicule automobile (40) ; et
- simulation, par une unité de commande, (12) de l'ouverture d'une porte (42) sur le côté sortie déterminé (41),
**caractérisé en ce que,** pour la simulation (12) de l'ouverture de la porte (42), des bruits extérieurs sont reproduits au moins dans une zone de porte sur le côté sortie (41) déterminé ou un courant d'air est généré au moins dans une zone de porte sur le côté sortie (41) déterminé.

2. Procédé selon la revendication 1, dans lequel, pour la simulation (12) de l'ouverture de la porte (42), une luminosité est en outre augmentée au moins dans une zone de porte sur le côté sortie (41) déterminé.

3. Procédé selon la revendication 2, dans lequel, pour l'augmentation de la luminosité, une intensité lumineuse d'un éclairage est modifiée ou une transparence d'une fenêtre (43) est augmentée.

4. Procédé selon l'une quelconque des revendications précédentes, dans lequel les bruits extérieurs sont des bruits extérieurs simulés ou des bruits extérieurs réels saisis par un microphone.

5. Procédé selon l'une quelconque des revendications précédentes, dans lequel le côté sortie (41) est déterminé (11) à l'aide de capteurs de véhicule (44) ou à partir de données de carte au moyen d'une position du véhicule automobile (40).

6. Procédé selon la revendication 5, dans lequel des bords de trottoir, bâtiments, véhicules ou personnes sont détectés dans l'environnement du véhicule automobile (40) sur la base de données des capteurs de véhicule (44).

7. Support d'enregistrement lisible par ordinateur pourvu d'instructions, lesquelles, lors de leur exécution par un ordinateur, amènent l'ordinateur à exécuter les étapes d'un procédé selon l'une quelconque des revendications 1 à 6 d'identification d'un côté sortie (41) d'un véhicule automobile (40).

8. Dispositif (20) d'identification d'un côté sortie (41) d'un véhicule automobile (40), comprenant :
- une unité d'analyse (23) pour la détermination (11) d'un côté sortie du véhicule automobile (40) ; et
- une unité de commande (24) pour la simulation (12) de l'ouverture d'une porte (42) sur le côté sortie déterminé (41) ;
**caractérisé en ce que** l'unité de commande (24) est configurée, pour la simulation (12) de l'ouverture de la porte (42), pour reproduire des bruits extérieurs au moins dans une zone de porte sur le côté sortie (41) déterminé ou pour générer un courant d'air au moins dans une zone de porte sur le côté sortie (41) déterminé.

9. Véhicule automobile (40), **caractérisé en ce que** le véhicule automobile (40) présente un dispositif (20) selon la revendication 8 ou est configuré pour exécuter un procédé selon l'une quelconque des revendications 1 à 6 d'identification d'un côté sortie (41) du véhicule automobile (40).
